# EUROPEAN PATENT APPLICATION

(11) **EP 4 503 779 A1**
(43) Date of publication of application: **05.02.2025**
(21) Application number: 22933976.7
(22) Date of filing: 28.03.2022
(51) Int. Cl.: H04W 64/00, H04W 72/04

(54) **INFORMATION PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: SHEN, Yang, Beijing 100085 (CN); LIU, Jianning, Beijing 100085 (CN); WU, Jinhua, Beijing 100085 (CN)
(74) Representative: Stöckeler, Ferdinand
(86) International application number: PCT/CN2022/083505
(87) International publication number: WO 2023/184119

(57) **Abstract**

Embodiments of the present disclosure provide an information processing method and apparatus, a communication device, and a storage medium. The information processing method is executed by a sensing function network entity, and comprises: receiving a registration request, wherein the registration request at least comprises identifier information, and the identifier information indicates a candidate executor capable of providing a sensing service.

## Description

### TECHNICAL FIELD

The disclosure relates to but is not limited to the field of wireless communication technology, and more particularly relates to an information processing method, an information processing apparatus, a communication device and a storage medium.

### BACKGROUND

Wireless sensing technologies aim to acquire information about a remote object by transmitting a sensing signal without physical contact. After analyzing sensing data (or referred to as perception data) of a target or sensing data around a target, characteristics of the target and/or characteristics of the environment in which the target is located may be obtained.

Radar is widely used in wireless sensing technology that uses radar signals to determine a distance, an angle, or an instantaneous velocity of the target.

There are other sensing technologies, such as a non-radio frequency (RF) sensor. The non-RF sensor may include a time-of-flight (ToF) camera, an acceleration sensor, a gyroscope and a laser radar.

Integrated sensing and communication system means that in the fifth generation (5G) mobile communication, new radio (NR) is endowed with sensing capabilities, so that the communication system and infrastructure of the 5G NR may be used for both communication and sensing services.

### SUMMARY

Embodiments of the disclosure provide an information processing method, an information processing apparatus, a communication device and a storage medium.

According to a first aspect of embodiments of the disclosure, an information processing method, performed by a sensing function network entity, is provided. The method includes:
receiving a registration request, in which the registration request at least includes identification for indicating a candidate executor capable of providing a sensing service.

According to a second aspect of embodiments of the disclosure, an information processing method, performed by a candidate executor with a sensing service execution ability, is provided. The method includes:
sending a registration request to a sensing function network entity, in which the registration request at least includes identification for indicating a candidate executor capable of providing a sensing service.

According to a third aspect of embodiments of the disclosure, an information processing apparatus is provided. The apparatus includes:
a first receiving module, configured to receive a registration request, in which the registration request at least includes identification for indicating a candidate executor capable of providing a sensing service.

According to a fourth aspect of embodiments of the disclosure, an information processing apparatus is provided. The apparatus includes:
a second sending module, configured to send a registration request to a sensing function network entity, in which the registration request at least includes identification for indicating a candidate executor capable of providing a sensing service.

According to a fifth aspect of embodiments of the disclosure, a communication device, including a processor, a transceiver, a memory and an executable program stored on the memory and capable of being run by the processor, is provided. When the executable program is executed by the processor, the method of the first aspect as described above or the method of the second aspect as described above is implemented.

According to a sixth aspect of embodiments of the disclosure, a computer storage medium having stored therein an executable program is provided. When the executable program is executed by a processor, the method of the first aspect as described above or the method of the second aspect as described above is implemented.

According to the technical solutions provided in embodiments of the disclosure, if a device may act as the candidate executor of the sensing service, the device may actively send the registration request to a sensing function (SF). In this way, when the SF determines a target executor for providing the sensing service in the future, it can quickly select a suitable executor for providing the sensing service from the candidate executors based on the registration request, thereby ensuring a response rate of the sensing service.

It is understandable that the foregoing general description and the following detailed descriptions are exemplary and explanatory only and do not limit embodiments of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the embodiments of the disclosure.
FIG. 1 is a schematic diagram of a wireless communication system illustrated according to an exemplary embodiment.
FIG. 2 is a flowchart of an information processing method illustrated according to an exemplary embodiment.
FIG. 3 is a schematic diagram of a wireless communication system illustrated according to an exemplary embodiment.
FIG. 4 is a flowchart of an information processing method illustrated according to an exemplary embodiment.
FIG. 5 is a flowchart of an information processing method illustrated according to an exemplary embodiment.
FIG. 6 is a flowchart of an information processing method illustrated according to an exemplary embodiment.
FIG. 7 is a flowchart of an information processing method illustrated according to an exemplary embodiment.
FIG. 8 is a flowchart of an information processing method illustrated according to an exemplary embodiment.
FIG. 9 is a schematic diagram of an information processing apparatus illustrated according to an exemplary embodiment.
FIG. 10 is a schematic diagram of an information processing apparatus illustrated according to an exemplary embodiment.
FIG. 11 is a schematic diagram of a user equipment (UE) illustrated according to an exemplary embodiment.
FIG. 12 is a schematic diagram of a communication device illustrated according to an exemplary embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all possible implementations consistent with embodiments of the disclosure. Instead, they are merely examples of apparatuses and methods consistent with aspects related to the disclosure as recited in the appended claims.

The terms used in the disclosure are only for the purpose of describing specific embodiments, and are not intended to limit embodiments of the disclosure. The singular forms of "a" and "the" used in the disclosure are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in embodiments of the disclosure to describe various types of information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein may be interpreted as "when", "while" or "in response to determining".

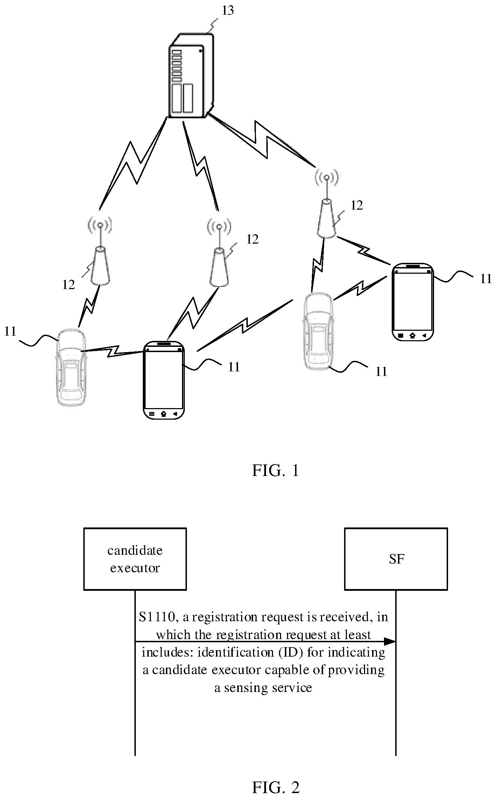

FIG. 1 is a schematic diagram illustrating a wireless communication system according to an embodiment. As illustrated in FIG. 1, the wireless communication system is a communication system based on cellular mobile communication technology. The wireless communication system may include: several user equipments (UEs) 11 and several access devices 12.

The UE 11 may be a device that provides voice and/or data connectivity to a user. The UE 11 may communicate with one or more core networks via a radio access network (RAN). The UE 11 may be an Internet of Things (IoT) UE, such as a sensor device, a cell phone (or "cellular" phone), and a computer with the IoT UE, for example, a stationary, portable, pocket-sized, handheld, computer-built, or vehicle-mounted device, such as, a Station (STA), a subscriber unit, a subscriber station, a mobile station, a mobile, a remote station, an access point, a remote terminal, an access terminal, a user terminal, a user agent, a user device, or a user equipment. Or, the UE 11 may also be an unmanned aerial vehicle device. Or, the UE 11 may also be an in-vehicle device, for example, a driving computer having wireless communication function or a wireless communication device external to the driving computer. Or, the UE 11 may also be a roadside device, for example, a street light, a signal light, or other roadside devices having the wireless communication function.

The access device 12 may be a network side device in the wireless communication system. The wireless communication system may be a 4th Generation (4G) mobile communication system, also known as a Long Term Evolution (LTE) system. Or, the wireless communication system may also be a 5G system, also known as New Radio (NR) system or 5G NR system. Or, the wireless communication system may be any next generation system of the 5G system. The access network in the 5G system may be called a New Generation-Radio Access Network (NG-RAN) or a machine type communication (MTC) system.

The access device 12 may be an evolved access device (eNB) employed in the 4G system. Or, the access device 12 may be an access device (gNB) with a centralized distributed architecture employed in the 5G system. When the access device 12 adopts a centralized-distributed architecture, the access device 12 usually includes a central unit (CU) and at least two distributed units (DUs). The CU is equipped with protocol stacks of a Packet Data Convergence Protocol (PDCP) layer, a Radio Link Control (RLC) layer, and a Media Access Control (MAC) layer. The DU is equipped with a protocol stack of a physical (PHY) layer, and the specific implementation of the access device 12 is not limited in embodiments of the disclosure.

A wireless connection may be established between the access device 12 and the UE 11 via a wireless radio interface. In different implementations, the wireless radio interface is a wireless radio interface based on the 4G standard. Or, the wireless radio interface is a wireless radio interface based on the 5G standard, such as a NR. Or, the wireless radio interface may be a wireless radio interface based on the standard of the next generation of 5G.

The sensing service provided by integrated sensing and communication system may involve communication-assisted sensing. The communication-assisted sensing may include: sensing involving communication channel or communication environment, and communication instructions for improving a communication service. For example, sensing information of the sensing service is used to assist in management of unintended resources, interference suppression, beam management, and UE mobility management.

In vertical fields, 5G-based sensing services may be used for smart transportation, aviation, enterprise management, smart city, smart home, factory, consumer application, extended reality (XR) or public partition.

There are various types of sensing services, for example,
vehicle to X (V2X), infrastructure-assisted environmental sensing, infrastructure remote piloting, high-definition map acquisition and sharing and remote piloting support, real-time environmental monitoring, autonomous driving, drones, air pollution monitoring, indoor healthcare, and intrusion detection.

Sensing for a wireless communication channel or environment may further improve the performance of the communication system. For example, sensing-assisted communications may include:
sensing a location and a channel environment of the UE, to narrow a beam scanning range and shorten a beam training time;
sensing a location, a velocity, a motion trajectory, and a channel environment of the UE for beam prediction, to reduce beam measurement overhead and beam tracking delay; and
sensing characteristics and a channel environment of the UE, to improve channel estimation performance.

The sensing system may include different roles, which may specifically include:
a reflection object, for sensing a target to obtain information about the target;
a transmitter, which is a device that sends a radio signal to the target, e.g., the transmitter may be a UE or a gNB;
a receiver, for detecting the radio signal reflected from the target and sensing to obtain the sensing information, similarly, the receiver may be a UE or a gNB;
an initiator, which is a device authorized to initiate the sensing service, e.g., the initiator may request or subscribe to one or more receivers for the sensing information. Similarly, the initiator may be a UE or a gNB, or may be a network function (NF). The initiator is typically a device that collects and processes the sensing information to generate a sensing result; and
a consumer that consumes and senses (i.e. uses) the sensing result, and the consumer may be an application of the UE or a sensing application server.

It is worth noting that the transmitter, the receiver, the initiator and the consumer can be configured in pairs or simultaneously.

As illustrated in FIG. 2, an embodiment of the disclosure provides an information processing method, which is performed by a sensing function network entity. The method includes the following step.

At step S1110, a registration request is received, in which the registration request at least includes: identification (ID) for indicating a candidate executor capable of providing a sensing service.

The sensing function network entity may be a NF entity located in a core network, and the NF entity may be referred to as a sensing function (SF).

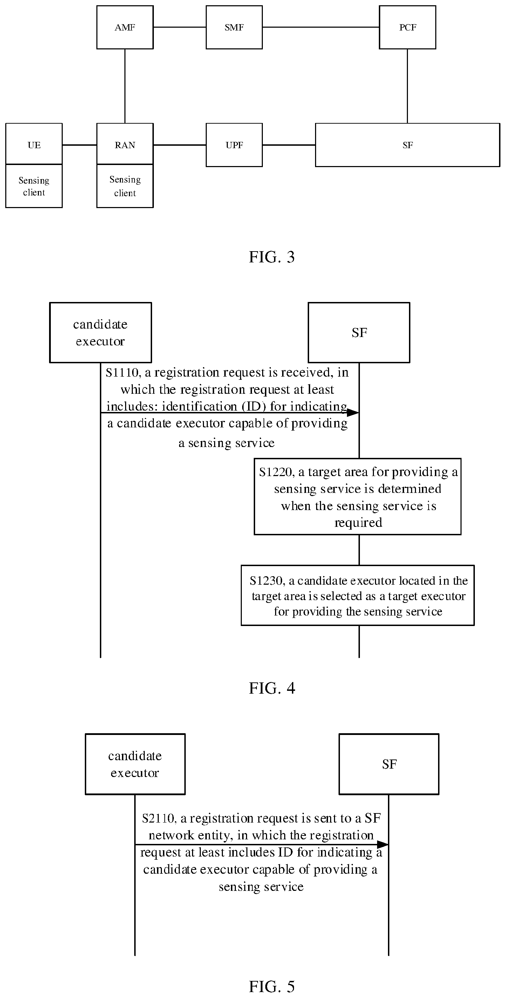

FIG. 3 shows a network architecture, which includes:
an access management function (AMF);
a session management function (SMF);
a policy control function (PCF);
a radio access network (RAN);
a user plane function (UPF);
a SF connected to the PCF and the UPF, respectively. In some embodiments, the SF may also be directly connected to the AMF. In some embodiments, the SF may also be referred to as a sensing application function (SAF); and
a UE.

In embodiments of the disclosure, the candidate executor may directly send a registration request to the SF. The registration request may at least carry the ID of the candidate executor. The SF thus may record the ID of the candidate executor, and determines, based on the recorded ID, which base stations and/or UEs are available to provide the sensing service, when the sensing service is required in the future.

The ID may be any information uniquely indicating the candidate executor.

For example, if the candidate executor is a UE, the ID of the UE includes, but is not limited to: an International Mobile Subscriber Identity (IMSI), an International Mobile Equipment Identity (IMEI), and a Mobile Subscriber International ISDN/PSTN number (MSISDN). ISDN is short for Integrated Service Digital Network, and PSTN is short for Public Switched Telephone Network. In some embodiments, the ID of the UE includes a Subscription Concealed Identifier (SUCI) or a Subscription Permanent Identifier (SUPI). For example, if the candidate executor is a base station, the ID of the base station includes, but is not limited to, an Internet Protocol (IP) address of the base station, or a Fully Qualified Domain Name (FQDN) of the base station.

The registration request may be: a non-access stratum (NAS) message sent by the UE to the SF.

In some embodiments, in addition to the ID, the registration request may further carry sensing capability information. The sensing capability information indicates a sensing capability of the candidate executor. For example, the sensing capability information indicates at least one of the following:
the candidate executor may act as a transmitter alone;
the candidate executor may act as a receiver alone;
the candidate executor may act as both transmitter and receiver; and
whether the candidate executor may act as a processor.

The transmitter may be an executor that transmits a sensing signal, and the sensing signal may be a radar signal and/or a radio frequency signal.

The receiver may receive a reflected signal generated based on the sensing signal.

The processor may process sensing data generated by the reflected signal received by the receiver to obtain a sensing result.

The sensing result may include: a preliminary sensing result and/or a final sensing result.

The preliminary sensing result may include: deleting interference data such as abnormal data and/or jitter data in the sending data, or roughly obtaining location information of a sensing target, firstly.

The final sensing result may be a result after processing the sensing data and/or the preliminary sensing result. The sensing result may be directly used in various application scenarios. For example, the sensing result may be directly used in assisted driving, unmanned driving, navigation or cruising, etc.

In some embodiments, the registration request further includes:
location information for indicating a location of the candidate executor.

The registration request also includes the location information. Thus, when the SF determines a target executor for providing the sensing service in the future, the SF may select, based on the location information, a candidate executor located in a target area as the target executor.

The location information may be: latitude and longitude information of the candidate executor, a cell ID of a cell in which the candidate executor is located and/or an ID of a tracking area (TA) in which the candidate executor is located, and the like.

In some embodiments, if the candidate executor is the base station, the ID of the base station is a kind of location information.

In some embodiments, the registration request may also include at least one of the following information:
a sensing model supported by the candidate executor;
a quality of service (QoS) of the sensing service that the candidate executor may provide; and
authorization information and/or permission information for the candidate executor to provide the sensing service.

According to the device type of the sensing executor, the sensing model may include the following types of models:
Model 1, where the base station acts as the transmitter and the UE acts as the receiver;
Model 2, where the base station acts as the receiver and the UE acts as the transmitter;
Model 3, where a single base station acts as both the transmitter and the receiver;
Model 4, where a single UE acts as both the transmitter and the receiver;
Model 5, where one UE acts as the transmitter and another UE acts as the receiver; and
Model 6, where one base station acts as the transmitter and another base station acts as the receiver.

The transmitter herein is the executor that transmits the sensing signal, and the receiver is the executor that receives the reflected signal generated by the sensing signal acting on the target and reflected.

In some embodiments, the executor of the sensing service may also include: the processor, and the processor may perform preliminary processing and deep processing on the sensing data obtained by the receiver receiving the reflected signal, to obtain the preliminary sensing result and/or the final sensing result.

In some embodiments, the UE and the base station both have the ability to provide the sensing service, but the UE or the manager is not willing the UE or the manager to provide the sensing service. Or, considering a security of the sensing service, the network side or the initiator/consumer of the sensing service may require the sensing service executor that is authenticated and authorized by itself or a third party. Therefore, the candidate executor may also carry the authorization information about whether the candidate executor is authorized to perform the sensing service and/or the permission information generated based on an indication of user in the registration request and send the registration request to the SF, so as to facilitate the SF to select the target executor, from the candidate executors, to provide the sensing service each time according to a security requirement of the sensing service in combination with the authorization information and/or the permission information.

As illustrated in FIG. 4, an embodiment of the disclosure provides an information processing method, which is performed by a SF network entity. The method includes the following steps.

At step S1210, a registration request is received.

At step S1220, a target area for which a sensing service is provided is determined when the sensing service is required.

At step S1230, a candidate executor located in the target area is selected as a target executor for providing the sensing service.

It should be understood that the above sequence is only an example, and step S1230 may be performed earlier than steps S1220 and S 1210, which is not limited in the disclosure.

For example, the UE sends the registration request to the SF after initial registration to the network, or the registration request of the UE initial registration to the network is registered to the SF simultaneously.

If the SF receives the registration request in advance, when the sensing service needs to be provided, it may consider selecting the candidate executor specified in the registration request as the target executor for providing the sensing service.

For example, the SF determines that the sensing service needs to be provided when the SF receives a sensing service request from the initiator of the sensing service, or according to configuration information provided by the sensing service, the SF may determines that the sensing service needs to be provided when a specified time period for providing the sensing service is reached.

In response to determining the need to provide the sensing service, the target area where the sensing service needs to be provided is determined firstly.

The target area may be indicated by area information. The area information may include at least one of the following:
a TA ID/TA IDs for indicating one or more TAs included within the target area;
a base station ID for indicating one or more base stations located within the target area;
a cell ID for indicating one or more cells included within the target area;
center point location information and a sensing radius, in which the center point location information indicates a location of a center point of the target area, and the center point location information includes, but is not limited to, the latitude and longitude information; and the sensing radius and the coordinates of the center point may be configured to determine the range of the target area; and
boundary point location information, in which a closed or nearly closed area is formed by directly connecting boundary points corresponding to a plurality of boundary point location information, and then the target area may be formed.

Certainly, the above are only a few examples of the area information carried by the sensing service request, and the specific implementations are not limited to the above examples.

After determining the target area, the base station and/or the UE currently located in the target area is determined, so that the base station and/or the UE currently located in the target area may act as the candidate executor for providing the sensing service.

In some embodiments, the method further includes:
sending a request message to the target executor, in which the request message is configured to request the target executor to provide the sensing service.

After the target executor is determined, the request message is sent to the target executor, and the request message is configured to trigger the target executor to provide the sensing service.

In some embodiments, the request message may further include: a sensing parameter for providing the sensing service. The sensing parameter may be used by the target executor to provide the sensing service.

In an embodiment, the request includes the sensing parameter for the target executor to provide the sensing service.

For example, the sensing parameter includes, but is not limited to, at least one of the following:
time information, indicating a time period during which the sensing service is provided;
operation type information, indicating that the corresponding target executor acts as the transmitter and/or the receiver;
a sensing signal parameter, indicating a signal frequency band and/or ID of the sensing signal used for a target sensing; and
target information, indicating a sensing target and/or one or more attributes of a sensing target, in which the attributes include, but are not limited to, an approximate shape, a volume, and/or a motion speed range of the target, etc.

The above parameters may be used for the target executor to provide the sensing service, and in the specific implementation process, the request sent to the target executor includes, but is not limited to, the above parameters.

In some embodiments, the sensing parameter may further include at least one of the following:
a return content parameter, e.g., at least whether the receiver sends the sensing data directly or returns the sensing result generated based on the sensing data; and
a return address, e.g., some of the sensing data and/or the sensing result may be directly returned to the consumer or the SF, in which if the sensing data and/or sensing result is returned directly to the SF, the sensing parameter may not contain a sensing address or may contain an address of the SF, and if the sensing data and/or sensing result is returned to the consumer, the sensing parameter may need to provide an IP address of the consumer, etc.

Certainly, the above are merely examples of the sensing parameters carried in the request message, and the specific implementations are not limited to the above examples.

In some embodiments, the method further includes: receiving sensing data or a sensing result, generated based on the sensing data, returned by the target executor.

In some embodiments, the candidate executor includes:
a base station;
a UE.

The base station and/or UE may provide the sensing service based on a radar signal, and may also provide the sensing service based on a radio frequency signal.

As illustrated in FIG. 5, an embodiment of the disclosure provides an information processing method, which is performed by a candidate executor with a sensing service execution ability. The method includes the following step.

At step S2110, a registration request is sent to a SF network entity, in which the registration request at least includes ID for indicating a candidate executor capable of providing a sensing service.

In embodiments of the disclosure, the candidate executor may be a device with the sensing service execution ability. For example, the candidate executor may include: a base station and/or a UE.

For example, the candidate executor with the sensing service execution ability may include at least one of the following:
a transmitter having the ability to transmit the sensing signal;
a receiver having the ability to receive the reflected signal generated based on the sensing signal; and
a processor that processes the sensing data provided by the receiver.

The registration request includes the ID that may uniquely identifies the candidate executor.

In some embodiments, the registration request further includes:
location information for indicating a location of the candidate executor.

The location information may be configured to inform the SF of the current location of the candidate executor, which facilitates the SF to select the target executor, in the future, according to the location information and a target area where the sensing service needs to be provided.

In some embodiments, the method further includes:
receiving a request message; and
providing a sensing service according to the request message.

If the candidate executor is selected as the target executor, the target executor may receive the request message sent by the SF. After receiving the request message, the target executor will provide the sensing service according to the request message.

In some embodiments, the request message may provide the sensing parameter. For example, the target executor provides the sensing service according to the sensing parameter. If the request message does not carry the sensing parameter, the sensing parameter is further requested to the SF, such that the SF sends the sensing parameter to the target executor separately.

The sensing parameter includes, but is not limited to, at least one of the following:
time information, indicating a time period during which the sensing service is provided;
operation type information, indicating that the corresponding target executor acts as the transmitter and/or the receiver;
a sensing signal parameter, indicating a signal frequency band and/or ID of the sensing signal used for a target sensing; and
target information, indicating a sensing target and/or one or more attributes of a sensing target, in which the attributes include, but are not limited to, an approximate shape, a volume, and/or a motion speed range of the target, etc.

The above parameters may be used by the target executor to provide the sensing service. In a specific implementation process, the request sent to the target executor includes, but is not limited to, the above parameters.

In some embodiments, the sensing parameter may include at least one of the following:
a return content parameter, e.g., at least whether the receiver sends the sensing data directly or returns a sensing result generated based on the sensing data; and
a return address, e.g., some of the sensing data and/or the sensing result may be directly returned to the consumer or the SF, in which if the sensing data and/or sensing result is returned directly to the SF, the sensing parameter may not contain a sensing address or may contain an address of the SF, and if the sensing data and/or sensing result is returned to the consumer, the sensing parameter may need to provide an IP address of the consumer, etc.

Certainly, the above are only examples of the sensing parameters carried by the request message, and the specific implementations are not limited to the above examples.

Therefore, in some embodiments, the method further includes: receiving sensing data returned by the target executor or a sensing result, generated based on the sensing data, returned by the target executor.

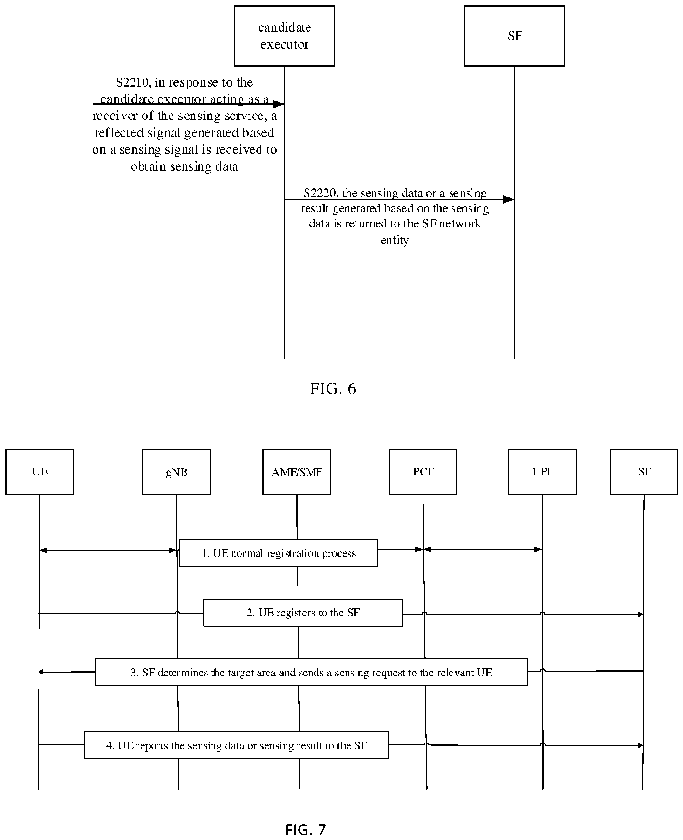

As illustrated in FIG. 6, an embodiment of the disclosure provides an information processing method, which is performed by a candidate executor with a sensing service execution ability. The method includes the following steps.

At step S2210, in response to the candidate executor acting as a receiver of the sensing service, a reflected signal generated based on a sensing signal is received to obtain sensing data.

At step S2220, the sensing data or a sensing result generated based on the sensing data is returned to the SF network entity.

If the candidate executor is determined as the receiver in the target executor, the candidate executor may receive the reflected signal generated by the sensing signal acting on the target and obtain the sensing data, then determines the sensing parameter or a default return content, and returns the sensing data and/or the sensing result to the SF.

In an embodiment, the receiver may send the sensing data to the SF separately, or return the sensing result to the SF separately.

In another embodiment, the receiver returns the sensing data and the sensing result to the SF simultaneously. After receiving the sensing data and the sensing result, the SF determines whether to use the sensing data and/or the sensing result according to the QoS of the sensing service, etc. For example, if the SF determines that the current accuracy requirement for the sensing result is low, the SF may directly use the sensing result provided by the receiver. If the SF determines that the current accuracy requirement for the sensing result is high, the SF may generate the sensing result autonomously by itself based on the sensing data, or correct the sensing result, provided by the receiver, using the sensing data and use the corrected sensing result.

A sensing client may be an application client hosted in the UE or RAN for sensing, and report the sensing data or the sensing result to the SF.

The SF is owned or trusted by a mobile operator, e.g., for sensing trusted businesses and technical relationships between an application owner and the mobile operator.

As illustrated in FIG. 7, an embodiment of the disclosure provides an information processing method. The method includes:
assuming that a UE acts as a transmitter and a receiver, a SF is authorized to start a sensing service.
1. For example, the UE performs a regular registration process to enable the UE to access a mobile network normally.
2. The UE registers to the SF, e.g., the UE installs a sensing client pre-configured with the sensing service, and the UE initiates a registration process to register itself to the SF, and the registration information includes an ID of the UE, an IMSI/IMEI/MSISDN, and/or a location of the UE.
3. The SF selects a sensing target according to the ID and/or location of the UE and sends a sensing request to the relevant UE.
4. The UE performs sensing according to the SF's request and reports the sensing data/result to the SF.

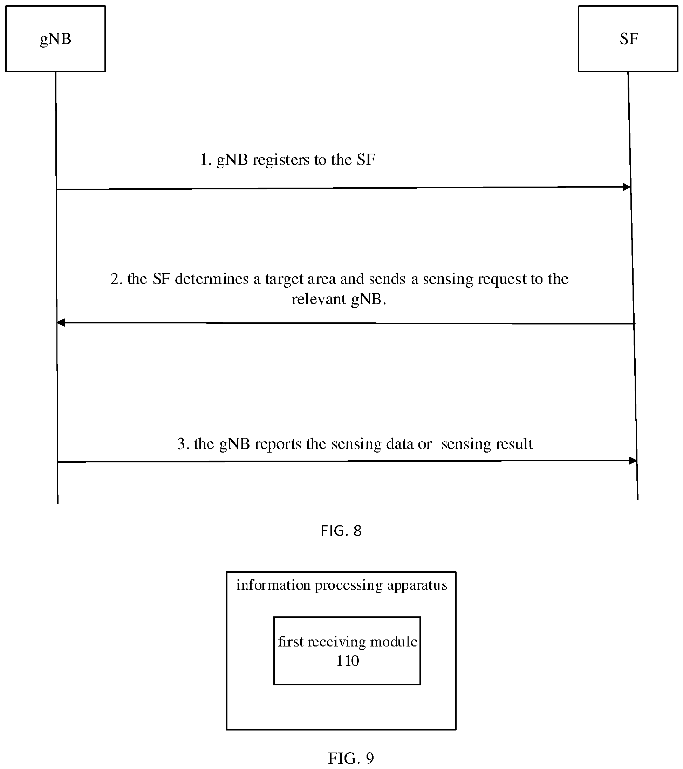

As illustrated in FIG. 8, an embodiment of the disclosure provides another information processing method. The method includes the following steps.
1. Assuming that a gNB acts as a transmitter and a receiver, a SAF is authorized to start the sensing service.
2. The gNB has installed a sensing client pre-configured with the SF. The gNB initiates a registration process to register itself to the SF, and the registration request includes an ID of the gNB.
3. The SF selects a sensing target according to the ID and/or location of the gNB and sends a sensing request to the relevant gNB.
4. The gNB performs sensing according to the SF's request and reports the sensing data/result to the SF.

As illustrated in FIG. 9, an embodiment of the disclosure provides an information processing apparatus. The apparatus includes:
a first receiving module 110, configured to receive a registration request, in which the registration request at least includes ID for indicating a candidate executor capable of providing a sensing service.

The information processing apparatus may be included in a SF.

The apparatus also includes a storage module. The storage module may be configured at least for storing the ID.

In some embodiments, the first receiving module 110 may be a program module. When the program module is executed by a processor, the above operations may be implemented.

In some embodiments, the first receiving module 110 may be a hardware and software combination module, which includes, but is not limited to, a programmable array. The programmable array include, but are not limited to, a field programmable array and/or a complex programmable array.

In some embodiments, the first receiving module 110 may be a pure hardware module, which includes, but is not limited to, a specific integrated circuit.

In some embodiments, the registration request also includes:
location information for indicating a location of the candidate executor.

In some embodiments, the apparatus also includes:
a determining module, configured to determine a target area for which the sensing service is provided when the sensing service needs to be provided; and
a selecting module, configured to select the candidate executor located in the target area as a target executor for providing the sensing service.

In some embodiments, the apparatus also includes:
a first sending module, configured to send a request message to the target executor, in which the request message is configured to request the target executor to provide the sensing service.

In some embodiments, the receiving module is configured to receive sensing data returned by the target executor or a sensing result, generated based on the sensing data, returned by the target executor.

In some embodiments, the candidate executor includes:
a base station;
a UE.

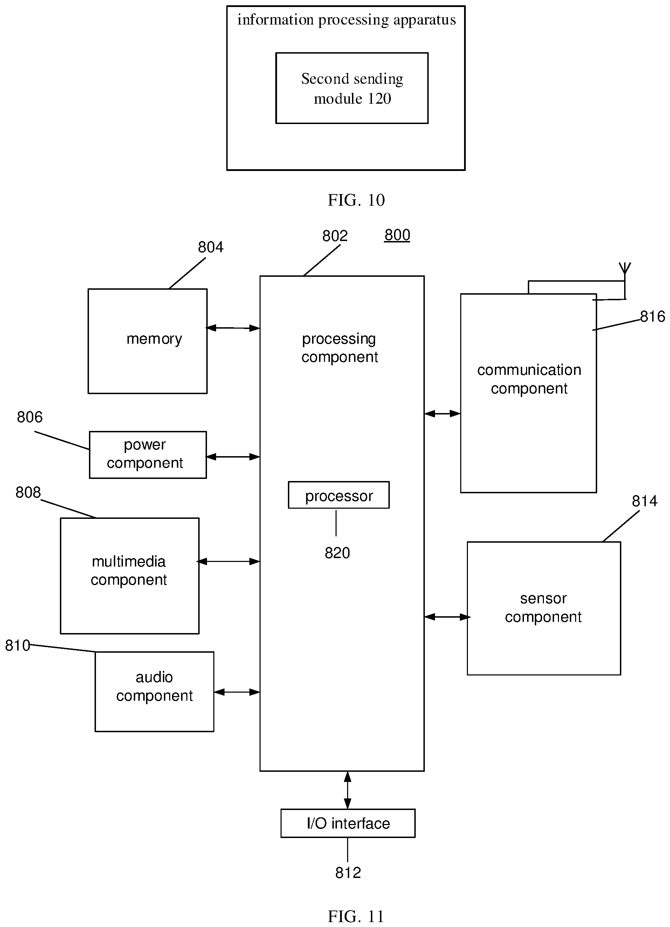

As illustrated in FIG. 10, an embodiment of the disclosure provides an information processing apparatus, which is provided by a candidate executor with a sensing service execution ability. The apparatus includes:
a second sending module 120, configured to send a registration request to a SF network entity, in which the registration request at least includes identification for indicating a candidate executor capable of providing a sensing service.

The information processing apparatus may be included in the candidate executor.

The apparatus also includes a storage module. The storage module may be configured at least for storing the registration request or the ID.

In some embodiments, the second sending module 120 may be a program module. When the program module is executed by a processor, the above operations may be implemented.

In some embodiments, the second sending module 120 may be a hardware and software combination module, which includes, but is not limited to, a programmable array. The programmable array includes, but are not limited to, a field programmable array and/or a complex programmable array.

In some embodiments, the second sending module 120 may be a pure hardware module, which includes, but is not limited to, a specific integrated circuit.

In some embodiments, the registration request also includes:
location information for indicating a location of the candidate executor.

In some embodiments, the apparatus also includes:
the second sending module 120, configured to receive the request message; and
a providing module, configured to provide the sensing service according to the request message.

In some embodiments, the apparatus also includes:
a third receiving module, configured to, in response to the candidate executor acting as a receiver of the sensing service, receive a reflected signal generated based on a sensing signal to obtain sensing data; and
a third sending module, configured to return the sensing data or a sensing result generated based on the sensing data to the SF network entity.

Embodiments of the disclosure also provide a communication device. The communication device includes:
a memory for storing instructions executable by a processor; and
a processor connected to the memory;
in which the processor is configured to execute the information processing method provided by any of the foregoing technical embodiments.

The processor may include various types of storage mediums, and the storage mediums are non-transitory computer storage mediums, which is capable of continuing to memorize information stored thereon after the communication device is powered down.

The communication device includes a UE or a network element. The network element may be any one of the aforementioned first network element to the fourth network element.

The processor may be connected to the memory via a bus or the like for reading executable programs stored on the memory, for example, at least one of the methods shown in FIG. 2 and FIGs. 4-8.

FIG. 11 is a schematic diagram of a UE 800 illustrated according to an exemplary embodiment. For example, the UE 800 may be a mobile phone, a computer, a digital broadcasting UE, a message transceiver device, a game console, a tablet device, a medical device, a fitness device or a personal digital assistant.

As illustrated in FIG. 11, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processors 820 to perform all or part of the steps in the above described methods. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, video, etc. The memory 804 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of wakeup time and a pressure associated with the touch or swipe action. In some embodiments, the multimedia component 808 includes a front-facing camera and/or a rear-facing camera. When the UE 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a Complementary Metal Oxide Semiconductor (CMOS) or Charge-Coupled Device (CCD) image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as Wi-Fi, 2G or 3G, or a combination thereof. In an exemplary embodiment, the communication component 816 receives a broadcast signal or broadcast associated information from an external broadcast management system via a broadcast channel. In an exemplary embodiment, the communication component 816 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In some exemplary embodiments, the UE 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described methods.

In some exemplary embodiments, there is also provided a non-transitory computer readable storage medium including instructions, such as the memory 804, executable by the processor 820 in the UE 800, for performing the above methods. For example, the non-transitory computer-readable storage medium may be a ROM, a Random Access Memory (RAM), a CD-ROM, a magnetic tape, a floppy disc, and an optical data storage device.

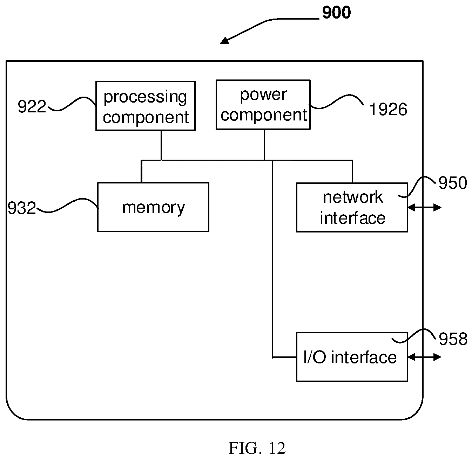

As illustrated in FIG. 12, an embodiment of the disclosure illustrates an architecture of an access device. For example, a communication device 900 may be provided as a network side device. The communication device may be various network elements such as the aforementioned access network element and/or network functions.

As illustrated in FIG. 12, the communication device 900 includes a processing component 922 consisting of one or more processors, and memory resources represented by a memory 932 for storing instructions executable by the processing component 922, such as applications. The application programs stored in the memory 932 may include one or more modules each corresponding to a set of instructions. In addition, the processing component 922 is configured to execute the instructions to perform any of the methods described above that are applicable to the access device, for example, any of the methods illustrated in FIG. 2 and FIGS. 4-8.

The communication device 900 may also include a power component 926 configured to perform power management of the communication device 900, a wired or wireless network interface 950 configured to connect the communication device 900 to a network, and an input/output (I/O) interface 958. The communication device 900 may operate based on an operating system stored in the memory 932, such as Windows Server TM, Mac OS XTM, UnixTM, LinuxTM, FreeBSDTM, or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the attached claims.

## Claims

1. An information processing method, performed by a sensing function network entity, comprising:
receiving a registration request, wherein the registration request at least comprises:
identification for indicating a candidate executor capable of providing a sensing service.

2. The method of claim 1, wherein the registration request further comprises:
location information for indicating a location of the candidate executor.

3. The method of claim 1 or 2, further comprising:
determining a target area for which the sensing service is provided when the sensing service is needed; and
selecting the candidate executor located in the target area as a target executor for providing the sensing service.

4. The method of claim 3, further comprising:
sending a request message to the target executor, wherein the request message is configured to request the target executor to provide the sensing service.

5. The method of claim 4, further comprising:
receiving sensing data or a sensing result, generated based on sensing data, returned by the target executor.

6. The method of any one of claims 1-5, wherein the candidate executor comprises:
a base station;
a user equipment (UE).

7. An information processing method, performed by a candidate executor with a sensing service execution ability, comprising:
sending a registration request to a sensing function network entity, wherein the registration request at least comprises: identification for indicating a candidate executor capable of providing a sensing service.

8. The method of claim 7, wherein the registration request further comprises:
location information for indicating a location of the candidate executor.

9. The method of claim 7 or 8, further comprising:
receiving a request message; and
providing the sensing service according to the request message.

10. The method of claim 9, further comprising:
in response to the candidate executor acting as a receiver of the sensing service, receiving a reflected signal generated based on a sensing signal to obtain sensing data; and
returning the sensing data or a sensing result generated based on the sensing data to the sensing function network entity.

11. The method of any one of claims 7-10, wherein the candidate executor comprises:
a base station;
a user equipment (UE).

12. An information processing apparatus, comprising:
a first receiving module, configured to receive a registration request, wherein the registration request at least comprises: identification for indicating a candidate executor capable of providing a sensing service.

13. An information processing apparatus, comprising:
a second sending module, configured to send a registration request to a sensing function network entity, wherein the registration request at least comprises: identification for indicating a candidate executor capable of providing a sensing service.

14. A communication device comprising a processor, a transceiver, a memory and an executable program stored on the memory and capable of being run by the processor, wherein when the executable program is executed by the processor, the method of any one of claims 1-6 or the method of any one of claims 7-11 is implemented.

15. A computer storage medium having stored therein an executable program that, when executed by a processor, implements the method of any one of claims 1-6 or the method of any one of claims 7-11.
